# EUROPÄISCHE PATENTSCHRIFT

(11) **EP 1 809 714 B1**
(45) Veröffentlichungstag und Bekanntmachung des Hinweises auf die Patenterteilung: **10.02.2010**
(21) Anmeldenummer: 05798541.8
(22) Anmeldetag: 01.10.2005
(51) Int. Cl.: C09D 183/04, B05D 7/14, C09D 5/10, C21D 7/13, C21D 7/02

(54) **VERFAHREN ZUR BESCHICHTUNG VON METALLISCHEN OBERFLÄCHEN**
METHOD FOR COATING METAL SURFACES
PROCEDE DE REVETEMENT DE SURFACES METALLIQUES

(30) Priorität: 08.10.2004 DE 102004049413
(43) Veröffentlichungstag der Anmeldung: 25.07.2007
(73) Patentinhaber: Volkswagen Aktiengesellschaft, 38436 Wolfsburg (DE); Nano-X GmbH, 66130 Saarbrücken (DE); ThyssenKrupp Steel Europe AG, 47166 Duisburg (DE)
(72) Erfinder: PAAR, Uwe, 34128 Kassel (DE); SEPEUR, Stefan, 66737 Wadgassen (DE); GOEDICKE, Stefan, 66540 Neukirchen (DE); STEINHOFF, Kurt, 47533 Kleve (DE)
(74) Vertreter: Basfeld, Rainer
(86) Internationale Anmeldenummer: PCT/EP2005/010622
(87) Internationale Veröffentlichungsnummer: WO 2006/040030

(56) Entgegenhaltungen:
- WO-A-2004/018732
- WO-A-2006/007985
- DD-A1- 104 314
- GB-A- 749 641
- US-A- 4 188 458
- US-A- 4 477 517
- PATENT ABSTRACTS OF JAPAN Bd. 017, Nr. 100 (C-1030), 26. Februar 1993 (1993-02-26) & JP 04 290580 A (NIPPON OIL & FATS CO LTD; others: 01), 15. Oktober 1992 (1992-10-15)
- PATENT ABSTRACTS OF JAPAN Bd. 2000, Nr. 11, 3. Januar 2001 (2001-01-03) & JP 2000 225374 A (TOAGOSEI CO LTD), 15. August 2000 (2000-08-15)
- PATENT ABSTRACTS OF JAPAN Bd. 2000, Nr. 10, 17. November 2000 (2000-11-17) & JP 2000 186234 A (TOAGOSEI CO LTD), 4. Juli 2000 (2000-07-04)

## Beschreibung

Die vorliegende Erfindung betrifft ein Verfahren zur Beschichtung einer metallischen Oberfläche eines Substrats, die mindestens teilweise aus Stahl besteht.

In Anbetracht der heutigen hohen Sicherheitsanforderungen im Fahrzeugbau kommen für tragende Karosserieteile und sicherheitsrelevante Teile wie beispielsweise Seitenaufprallträger und Verstärkungen ausgewählte Stahlsorten mit hohen Festigkeiten zum Einsatz.

Im Automobilbau werden für bestimmte Fahrzeuge heute einige Bauteile beispielsweise aus Mangan-Bor-Stahl (22MnB5) gefertigt. Mit dieser Stahlsorte können durch Warmumformhärtung Festigkeiten von bis zu 1650 MPa erreicht werden gegenüber herkömmlichen bei Kaltumformung üblichen Werten von bis zu 1100 MPa. Bei der Warmumformung wird der Stahl durch Aufheizen auf 950°C unter Schutzgasatmosphäre (Stickstoff) in den austenitischen Bereich gebracht, anschließend ins Umformwerkzeug überführt und umgeformt. Bei dem nur wenige Sekunden dauernden Prozess zwischen der Entnahme aus dem Ofen und der erfolgten Umformung erfährt das Stahlteil eine Abkühlung auf Temperaturen zwischen 100 - 200°C. Dabei erfolgt die Ausbildung einer martensitischen Gefügestruktur mit großer Festigkeit.

Ein Problem bei diesem Prozess ist die Verzunderung der Bauteile, die sofort auftritt, sobald das auf 950°C erwärmte Bauteil aus dem Schutzgas enthaltenden Ofen genommen wird und mit Luftsauerstoff in Berührung kommt. Die dabei entstehende Zunderschicht ist inhomogen, spröde, platzt schollenförmig ab und bietet keine Basis für Folgeprozesse wie Schweißen, KTL-Lackierung etc. und wird daher vor der Weiterverarbeitung des Bauteils durch Strahlen entfernt. Dieses Abstrahlen, das zum Teil von Hand durchgeführt wird, ist ein zeitaufwendiger und teurer Prozess und mit starker Schmutz- und Staubentwicklung verbunden. Zudem bleiben Bruchteile der Zunderschicht im Umformwerkzeug zurück und müssen regelmäßig mit großem Arbeits- und Zeitaufwand entfernt werden, was einem Durchlauf der gewünschten Stückzahlen in der Serienproduktion extrem entgegensteht. Daher existiert eine sehr starke Nachfrage nach Verfahren, die die Verzunderung im Warmumformprozess von vorn herein unterbinden.

Stand der Technik ist die sogenannte Alitierung. Bei diesem Oberflächenschutzverfahren wird Aluminium in die Stahloberfläche eingebracht. Es bilden sich Aluminium-Eisen-Mischkristalle, die einen guten Verzunderungsschutz bis 950°C bewirken. Das durch Spritzen oder Tauchen flüssig aufgebrachte Aluminium dringt beim anschließenden Diffusionsglühen in die Oberfläche ein. Die Spritzalitierung wird überall dort angewandt, wo Gebrauchsgegenstände aus Stahl einer thermischen Verzunderung durch hohe Betriebstemperatur ausgesetzt sind, und eine Fertigung aus hitzebeständigem Sonderwerkstoff wirtschaftlich nicht gerechtfertigt erscheint. Der Verzunderungsschutz durch Spritzalitierung beruht darauf, dass Aluminium bei Temperaturen von über 800°C unter Bildung einer Eisen-Aluminium-Legierung in den Stahl eindiffundiert. Es bildet sich also eine an Aluminium abnehmende Schicht zwischen dem Aluminium an der Oberfläche und dem Eisengrundwerkstoff. Die so gebildete Eisen-Aluminium-Legierung ist für sich oxydationsbeständiger als Stahl selbst, und überdies ergibt sich im Gebrauch an der Oberfläche sehr rasch eine ebenfalls hoch hitzebeständige Al2O3-Haut, die einem raschen Vordringen des Sauerstoffes an das Eisen vorbeugt. Entsprechend behandelte Teile sind bei Kraftfahrzeugherstellern in der Warmumformung im Einsatz, wobei durch die Aluminierung ein wirksamer Verzunderungsschutz erreicht wird. In manchen Anwendungsfällen kommen jedoch auch eine Vielzahl von Bauteilen mit einem höheren Umformgrad zum Einsatz, deren Umformung in zwei Schritten durchgeführt wird. Diese werden im ersten Schritt kalt vorgeformt und im nachfolgenden Warmumformschritt auf die Endgeometrie gebracht und gleichzeitig gehärtet. Die erwähnten aluminierten Bauteile sind hier nicht einsetzbar, da es bereits bei der Kaltumformung zu einer Schädigung der zum Beispiel ca. 25 -28 µm dicken Schicht kommt, was bei der nachfolgenden Warmumformung zu Verzunderung an den geschädigten Stellen beziehungsweise Abplatzungen führt.

In der EP 0 839 895 B1 wird ein Schmiermittel für die Warmumformung beschrieben, wobei es sich um ein Gemisch aus Alkalisilikaten, einer weiteren Alkaliverbindung, wie zum Beispiel einem Alkalihydroxyd, Wasser und einem Anteil von bis zu 20 Gew.-% eines Silan-Haftmittels handelt. Das Gemisch wird als Schmiermittel bei der Herstellung von nahtlosen Stahlrohren nach dem Mannesmann-Verfahren verwendet. Bei der Herstellung des Hohlkörpers treten aufgrund hoher Reibung Temperaturen in der Größenordnung von ca. 1.000°C oder darüber auf. Durch das genannte Schmiermittelgemisch soll ein Eisenoxidfilm erzeugt werden, wodurch der Schutz der Oberflächen gegen die beim Umformprozess auftretenden Reibungskräfte erzielt werden soll.

In dem japanischen Patent Abstract JP 3291325 wird ein Verfahren beschrieben, mittels dessen metallische Oberflächen beim Warmwalzen gegen Oxidation geschützt werden sollen. Dabei wird auf die metallische Oberfläche ein Gleitmittel aufgebracht, welches eine Glaskomponente enthält. Dieses Beschichtungsmaterial umfasst Aluminiumoxid, Siliziumoxid und Zirkonoxid, hat einen Schmelzpunkt im Bereich von 900 und 1300°C und soll einen Film mit antioxidierenden Eigenschaften auf der metallischen Oberfläche bilden, der nach dem Walzen zum Beispiel durch Sandstrahlen entfernt wird.

Die DE 100 63 519 A1 beschreibt ein Verfahren zur Herstellung lösungsmittelarmer Sol-Gel-Systeme durch Hydrolyse oder Kondensation eines Silans mit Alkoxyden unter Zugabe von Wasser und Abtrennen der Kondensatphase. Der Kondensatphase werden Nanopartikel zugesetzt und die so erhaltene Dispersion kann durch ein nasschemisches Applikationsverfahren wie zum Beispiel Sprühen, Tauchen oder Walzen auf ein beliebiges Substrat aufgebracht werden. Als Substrate werden insbesondere Glas, Keramik, Holz, Stein, Kunststoff, Textilien, Papier genannt, wobei auch Metall erwähnt wird. Nach der Aufbringung der Dispersion auf das Substrat kann eine Trocknung im Temperaturbereich von 20 bis etwa 500°C erfolgen.

Die DD 104 314 A1 beschreibt ein Mittel, das zur Herstellung einer Schutzschicht gegen Verzunderung auf metallischen Oberflächen geeignet ist. Darüber hinaus ist aus der vorstehend genannten Druckschrift ein Verfahren zur Beschichtung von metallischen Oberflächen bekannt, bei dem man eine Schicht einer Zusammensetzung, die ein Siliconharzbindemittel und einen metallischen Füllstoff umfasst, auf die Oberfläche aufbringt. Anschließend wird die Beschichtung getrocknet und/oder ausgehärtet.

Aus der US 4 477 517 A ist ebenfalls ein Mittel bekannt, das zur Herstellung einer Schutzschicht gegen Verzunderung auf metallischen Oberflächen geeignet ist.

Aus der GB 749 641 A ist ein Verfahren zur Beschichtung von metallischen Oberflächen bekannt, bei dem vor dem Warmumformprozess eine Schicht einer Zusammensetzung auf die Oberfläche aufgebracht wird, die einen glasartigen (schmelzbaren) Füllstoff und beispielsweise ein Siliconharzbindemittel umfasst.

Ausgehend von dem vorgenannten Stand der Technik besteht die Aufgabe der vorliegenden Erfindung darin, ein Verfahren zur Beschichtung von metallischen Oberflächen zur Verfügung zu stellen, welches die Herstellung einer wirkungsvolleren Schutzschicht gegen Verzunderung ermöglicht.

Die Lösung dieser Aufgabe liefert ein Verfahren zur Beschichtung von metallischen Oberflächen mit den Merkmalen des Hauptanspruchs. Die Unteransprüche betreffen vorteilhafte Weiterbildungen der Erfindung.

Bei dem erfindungsgemäßen Verfahren zur Beschichtung einer metallischen Oberfläche eines Substrats, die mindestens teilweise aus Stahl besteht, ist vorgesehen, dass ein Mittel zur Herstellung einer Schutzschicht gegen Verzunderung, das als Bindemittel HydrolysatelKondensate mindestens eines Silans oder ein Siliconharzbindemittel sowie weiterhin mindestens einen metallischen Füllstoff enthält, auf die Oberfläche aufgebracht wird. Die Beschichtung wird anschließend getrocknet und/oder ausgehärtet. Das Substrat wird nach der Oberflächenbeschichtung einem Warmumformprozess unterzogen.

Das vorliegende Verfahren eignet sich insbesondere zur Oberflächenbeschichtung eines Substrats, dessen Oberfläche mindestens teilweise aus Stahl besteht. Das erfindungsgemäße Verfahren ist insbesondere vorgesehen für das Oberflächenbeschichten von Substraten aus hochfestem Stahl und eignet sich vorzugsweise für die Oberflächenbeschichtung eines Substrats aus hochfestem Stahl, welches nach der Oberflächenbeschichtung einem Warmumformprozess unterzogen wird, insbesondere einer Warmumformung bei Temperaturen zwischen etwa 800°C und etwa 1000°C, vorzugsweise bei Temperaturen zwischen etwa 880°C und etwa 970°C.

Gegenstand der vorliegenden Erfindung ist die Erzeugung einer speziellen Schutzschicht, die als Lack auf den Stahl aufgebracht und anschließend bei Raumtemperatur getrocknet oder thermisch ausgehärtet wird und die lackierten Teile wirkungsvoll vor Verzunderung beim Warmumformprozess bei zum Beispiel 950°C schützt.

Überraschenderweise hat sich gezeigt, dass durch die Kombination eines Bindemittels und mindestens eines metallischen Füllstoffes eine Beschichtungszusammensetzung erhalten wird, die sich insbesondere nasschemisch auf eine metallische Oberfläche aufbringen lässt und mittels derer die metallische Oberfläche, insbesondere eine Oberfläche aus Stahl bei Temperaturen, wie sie bei der Warmumformung auftreten, wirkungsvoll vor Verzunderung beim Kontakt mit Luftsauerstoff geschützt werden kann. Ein Vorteil der Erfindung liegt also darin, dass ein Verzunderungsschutz einfach durch nasschemisches Aufbringen und Trocknen beziehungsweise thermisches Härten einer lackartigen Beschichtungszusammensetzung gewährleistet werden kann.

Dieses Verfahren ist daher sehr flexibel einsetzbar, das heißt, der Lack kann beim Lackierer oder direkt beim Automobilhersteller durch Spritzen, Walzen, Fluten, Rakeln, Drucken oder Tauchen auf nahezu beliebige Teile appliziert werden. Vorteilhaft ist außerdem, dass der Lack durch seine hervorragende Haftung, Flexibilität und vorzugsweise eine geringe Schichtdicke im unteren µm-Bereich einer Kalt- und Warmumformung standhält und somit für eine Direktbeschichtung des Stahlcoils in der Bandbeschichtungsanlage prädestiniert ist.

Nach dem erfindungsgemäßen Verfahren kann eine Lackschicht mit einer Schichtdicke von beispielsweise weniger als etwa 30 µm, vorzugsweise weniger als etwa 10 µm aufgebracht werden. Nach der erfindungsgemäßen Oberflächenbeschichtung kann beispielsweise eine KTL-Lackierung und/oder Phosphatierung erfolgen. Zur Herstellung der erfindungsgemäßen Lackschicht wird beispielsweise ausgegangen von mindestens einem Alkoxysilan, Arylsilan und/oder Alkylsilan. Beispielsweise wird zur Herstellung der erfindungsgemäßen Lackschicht ein Gemisch umfassend mindestens ein Alkylalkoxysilan und mindestens ein Alkoxysilan hydrolisiert beziehungsweise kondensiert. Das mindestens eine Silan beziehungsweise ein Gemisch von Silanen beispielsweise der zuvor genannten Art wird vorzugsweise in schwach saurer Lösung hydrolisiert und/oder kondensiert. Man kann dazu beispielsweise eine schwache organische Säure wie Ameisensäure oder dergleichen verwenden. Dabei gibt man zur Herstellung der mindestens einen Lackschicht dem zu hydrolisierenden Silan beziehungsweise den zu hydrolisierenden und kondensierenden Silanen mindestens einen metallischen Füllstoff zu. Als Füllstoff kann man insbesondere ein Metallpigment eines der Metalle Al, Zn, Mg, Fe, Sn oder einer Legierung eines dieser Metalle verwenden.

Anstatt Silane zu hydrolisieren beziehungsweise zu kondensieren, kann man als Bindemittel auch ein Siliconharz in einem Lösungsmittel vorgelöst verwenden, wobei der Feststoffgehalt vorzugsweise zwischen etwa 10 % und etwa 90 % beträgt. Als Lösungsmittel sind dabei vorzugsweise handelsübliche Alkohole, Ester, Ether oder Kohlenwasserstoffe, zum Beispiel Benzine geeignet, wobei vorzugsweise Lösungsmittel mit einem Flammpunkt > 23°C eingesetzt werden. Beispielsweise sind als Lösungsmittel Butylglykol, 1-Butanol, 1-Methoxy-2-propanol oder dergleichen geeignet. Die insbesondere nach einer Warmumformung entstehende Beschichtung weist einen ausreichenden Korrosionsschutz zur Weiterverarbeitung der metallischen Substrate, insbesondere Stähle auf. Beispielsweise kann eine anschließende Phosphatierung und/oder KTL-Lackierung nach einem in der Automobilindustrie üblichen Verfahren erfolgen.

Es ist gegebenenfalls auch möglich, lösungsmittelfrei zu arbeiten, wenn man zum Beispiel ein Siliconharz-Bindemittel verwendet. In diesem Fall kann das Siliconharz ähnlich einem Pulverlack verarbeitet werden.

Die Härtung des Beschichtungsmaterials kann durch Ablüften bei Raumtemperatur oder beschleunigt bei erhöhter Temperatur erfolgen, wobei Temperaturen von vorzugsweise bis zu 400°C zur Trocknung und Aushärtung der Beschichtung angewandt werden können. Es kann auch eine beschleunigte Härtung beispielsweise durch IR-Strahlung, Umlufttrocknung, UV-Bestrahlung oder Elektronenstrahlhärtung sinnvoll sein. Die Beschichtung kann sowohl auf flache Substrate oder auch auf Coils aufgebracht werden, die einen Schritt der Kalt- und/oder Warmumformung durchlaufen oder aber die Beschichtung kann auch auf bereits kalt umgeformte Stahlsubstrate aufgebracht werden.

Das Netzwerk der Beschichtungszusammensetzung kann gemäß einer Weiterbildung der Erfindung durch Nanopartikel verstärkt werden, wobei diese insbesondere ausgewählt werden aus metall- und nichtmetalloxydischen Partikeln mit einer Größe im Bereich von vorzugsweise zwischen etwa 2 nm und etwa 50 nm. Hier kommen beispielsweise Substanzen wie AIOOH, Korund, Zirkonoxid, SiO2, TiO2 oder Ähnliches in Betracht.

Gemäß einer Weiterbildung der Erfindung kann eine zusätzliche Modifikation der Beschichtungszusammensetzung sinnvoll sein, wobei man für die Warm- und/oder Kaltumformung dieser Beschichtungsmasse ein Feststoffschmiermittel zugibt, beispielsweise ein Wachs, Stearat, Graphit, MoS2, Bornitrid, Aluminiumoxid, Titandioxid, ein Schichtpigment, zum Beispiel Glimmer oder dergleichen. Weiterhin könnten gegebenenfalls handelsübliche Rheologieadditive zugegeben werden, zum Beispiel Thixotropiermittel, Verlaufsmittel oder dergleichen.

Nach Trocknung und Aushärtung, insbesondere durch Erwärmung auf zum Beispiel bis zu ca. 400°C erhält man einen fest haftenden Film auf dem Substrat (zum Beispiel Stahlband), der durch die verwendeten organischen Komponenten flexibel ist. Die vorzugsweise mikroskaligen Füllstoffe verbessern die Schmierwirkung bereits bei einer Kaltumformung eines so beschichteten metallischen Substrats. Bei einer weiteren Erwärmung auf Temperaturen wie sie üblicherweise zur Warmumformung von Stahlband eingesetzt werden brennt die organische Komponente (das heißt die an den Silanen substituierten organischen Reste) aus, so dass eine glasartige Matrix auf der beschichteten Oberfläche verbleibt. Diese verbackt gemeinsam mit den Füllstoffen zu einer fest haftenden dichten Schicht. Ein metallisches Substrat mit einer derart beschichteten Oberfläche kann danach einer Warmumformung unterzogen werden. Die glasartige Matrix bleibt durch die geringe Schichtdicke und die innige Verbindung mit dem Bauteil und den temperaturbeständigen Füllstoffen umformbar, wobei die Schmierwirkung erhalten bleibt. Bei einer eventuellen Nachbehandlung eines derart beschichteten Substrats, zum Beispiel bei einer kathodischen Tauchlackierung tragen die metallischen Füllstoffe in der Schicht zu der für die KTL notwendigen elektrischen Leitfähigkeit bei.

Gegenstand der vorliegenden Erfindung ist weiterhin ein Kraftfahr-zeugbauteil, insbesondere Karosserieteil, welches mindestens teilweise eine nach einem Verfahren gemäß der vorliegenden Erfindung hergestellte Oberflächenbeschichtung aufweist. Das erfindungsgemäße Verfahren eignet sich insbesondere zur Beschichtung von tragenden Karosserieteilen oder sicherheitsrelevanten Teilen wie zum Beispiel Seitenaufprallträgern oder Verstärkungen, für die in der Regel ausgewählte Stahlsorten mit hohen Festigkeiten zum Einsatz kommen.

Nachfolgend wird die vorliegende Erfindung anhand von Ausführungsbeispielen näher erläutert:
Es werden beispielhaft drei Basisrezepturen für die Lackherstellung mit den entsprechenden Ergebnissen beschrieben:

### Beispiel 1:

Zu 100 g Methyltriethoxysilan (MTEOS), 40 g Glycidyloxypropyltriethoxysilan (GLYEO, Degussa) und 40 g Tetraethoxysilan (TEOS, Degussa) werden 108 g 5%ige Ameisensäure gegeben und bei Raumtemperatur über Nacht gerührt. Danach werden 50 g Aluminiumpigmentpaste Decomet Hochglanz Al 1002/10 der Firma Schlenk mit einem Flügelrührer eingerührt und nach vollständiger Verteilung des Pigments unter Rühren 100 g Ethanol zugegeben. Vor der weiteren Verarbeitung werden dem Ansatz 5 g eines Netzmittels vom Typ Byk Dynwet 800 (Firma Byk Chemie) zugesetzt.

Der fertige Lack wird mit einer Fließbecher-Lackierpistole (zum Beispiel Sata Jet, Düse 1,4 mm) auf ein fettfreies Vorziehteil auflackiert, so dass die gesamte Oberfläche von einem dünnen Nassfilm bedeckt ist. Die Lackschicht wird ca. 5 min bei Raumtemperatur ablüften gelassen und danach je nach geforderter Abriebbeständigkeit entweder weitere 30 min bei Raumtemperatur getrocknet oder 5 - 15 min bei einer Temperatur von 80 - 200°C ausgehärtet.

### Ergebnisse:

Nach der Aushärtung und Rückkühlung auf Raumtemperatur ist das Vorziehteil von einer ca. 2 - 6 µm dicken silbrigen Schicht überzogen, die fest auf dem Substrat haftet (sehr gute Werte im Gitterschnitt/Tape Test) sowie gegenüber festem Kratzen mit dem Fingernagel unempfindlich ist. Die beschichteten Teile sind korrosionsunempfindlich bei Lagerung unter trockener Atmosphäre. Die beschichteten Teile können unmittelbar nach der Beschichtung aber auch nach Lagerung im Warmumformprozess eingesetzt werden und zeigen auch nach Kontakt mit Luftsauerstoff bei 950°C keinerlei Verzunderung. Bei 950°C bildet sich eine fest haftende Mischoxidschicht aus Eisen, Aluminium, Silicium und Sauerstoff, die als Haftgrund für eine nachfolgende KTL-Lackierung geeignet ist.

### Beispiel 2:

Zu einer Mischung aus 120 g Methyltriethoxysilan (MTEOS) und 60 g Tetraethoxysilan (TEOS), bezogen von Degussa-Hüls werden 108 g 5 %ige Ameisensäure gegeben und bei Raumtemperatur über Nacht gerührt. Danach werden 50 g Aluminiumpigmentpaste Decomet Hochglanz Al 1002/10 der Firma Schlenk mit einem Flügelrührer eingerührt und nach vollständiger Verteilung des Pigments unter Rühren 150 g N-Methyl-2-pyrrolidinon zugegeben. Vor der weiteren Verarbeitung werden dem Ansatz 5 g eines Netzmittels vom Typ Byk 306 (Firma Byk Chemie) zugesetzt. Als Festschmierstoff werden 5 g Molybdändisulfidpulver mit einer Partikelgröße < 5 µm zugegeben und 20 min mit einem Dissolver bei einer Drehzahl von 1000 U/min homogen eindispergiert.

Der fertige Lack wird in einer Bandbeschichtungsanlage bei einer Bandgeschwindigkeit von 60m/min auf ein fettfrei vorgereinigtes Stahlband aufgewalzt und bei einer Temperatur von 200 - 250°C ausgehärtet.

### Ergebnisse:

Nach der Aushärtung ist das Coil mit einer homogenen silbrigen Schicht mit einer Dicke im Bereich von ca. 2 - 6 µm (einstellbar) bedeckt, die mechanisch so widerstandsfähig ist, dass das Stahlband ohne Beschädigung der Schicht aufgerollt und mit den üblichen Methoden weiterverarbeitet werden kann. Zugeschnittene Platinenteile können ohne Beschädigung der Schicht an den Knickstellen kalt umgeformt und anschließend ohne Verzunderung im Warmumformprozess verarbeitet werden. Bei 950°C bildet sich eine fest haftende Mischoxidschicht aus Eisen, Aluminium, Silicium und Sauerstoff, die als Haftgrund für eine nachfolgende KTL-Lackierung geeignet ist.

### Beispiel 3:

Zu einer Mischung aus 120 g Methyltriethoxysilan (z.B. Dynasylan MTES, Fa. Degussa) und 40 g Tetraethoxysilan (z.B. Dynasil A, Fa. Degussa) werden 100 g 1%ige Trifluoressigsäure gegeben und bei Raumtemperatur über Nacht gerührt. Danach werden 150 g des hoch siedenden Lösemittels Butylglykol, 0,2 g Dispergiermittel Disperbyk 180 (Fa. Byk Chemie) sowie 35 g Aluminiumpigmentpaste Decomet 1006/30 (Fa. Schlenk) zugegeben und mit einem Flügelrührer eingerührt. Als Festschmierstoff werden 5 g gemahlener Naturgraphit mit einer Partikelgröße < 5 µm zugegeben. Zur Einstellung der benötigten Verarbeitungsviskosität- bzw. Thixotropie wird 1 g Aerosil 200 zu der Formulierung hinzugegeben. Die Füllstoffe werden mit einem Dissolver 20 min mit 1000 U/min homogen eindispergiert.

Der fertige Lack wird in einer Bandbeschichtungsanlage bei einer Bandgeschwindigkeit von 60 m/min auf ein fettfrei vorgereinigtes Stahlband aufgewalzt und bei einer Temperatur von 200-250°C ausgehärtet.

### Ergebnisse:

Nach der Aushärtung ist das Coil mit einer homogenen silbrigen Schicht mit einer Dicke im Bereich von ca. 2-6 µm (einstellbar) bedeckt, die mechanisch so widerstandsfähig ist, dass das Stahlband ohne Beschädigung der Schicht aufgerollt und mit den üblichen Methoden weiterverarbeitet werden kann. Zugeschnittene Platinenteile können ohne Beschädigung der Schicht an den Knickstellen kalt umgeformt und anschließend ohne Verzunderung im Warmumformprozeß verarbeitet werden. Bei 950°C bildet sich eine fest haftende Mischoxidschicht aus Eisen, Aluminium, Silicium und Sauerstoff, die als Haftgrund für eine nachfolgende KTL-Lackierung geeignet ist.

## Patentansprüche

1. Verfahren zur Beschichtung einer metallischen Oberfläche eines Substrats, die mindestens teilweise aus Stahl besteht, wobei ein Mittel zur Herstellung einer Schutzschicht gegen Verzunderung, das als Bindemittel Hydrolysate/Kondensate mindestens eines Silans oder ein Siliconharzbindemittel sowie weiterhin mindestens einen metallischen Füllstoff enthält; auf die Oberfläche aufgebracht wird und die Beschichtung anschließend getrocknet und/oder ausgehärtet wird, und wobei das Substrat nach der Oberflächenbeschichtung einem Warmumformprozess unterzogen wird.

2. Verfahren nach Anspruch 1, **dadurch gekennzeichnet, dass** das Mittel weiterhin mindestens ein Metallsalz enthält.

3. Verfahren nach einem der Ansprüche 1 oder 2, **dadurch gekennzeichnet, dass** die Hydrolysate/Kondensate mindestens eines Silans mindestens aus einem Alkoxysilan, Arylsilan und/oder Alkylsilan gebildet sind.

4. Verfahren nach einem der Ansprüche 1 bis 3, **dadurch gekennzeichnet, dass** das Bindemittel in einem Lösungsmittel vorgelöst ist, wobei der Feststoffgehalt vorzugsweise zwischen 10 % und 90 % beträgt.

5. Verfahren nach Anspruch 4, **dadurch gekennzeichnet, dass** das Lösungsmittel ein Alkohol, Ester, Ether oder ein Kohlenwasserstoff ist, vorzugsweise mit einem Flammpunkt > 23°C.

6. Verfahren nach einem der Ansprüche 1 bis 5, **dadurch gekennzeichnet, dass** der metallische Füllstoff ein Metallpigment eines der Metalle Al, Zn, Mg, Fe, Sn oder einer Legierung eines dieser Metalle ist.

7. Verfahren nach einem der Ansprüche 1 bis 6, **dadurch gekennzeichnet, dass** das Mittel als metallischen Füllstoff wenigstens ein Metallpigment in einer solchen Menge enthält, dass sich ein Anteil zwischen 10 % und 90 % Feststoff nach Aushärtung der Beschichtung ergibt.

8. Verfahren nach einem der Ansprüche 1 bis 7, **dadurch gekennzeichnet, dass** das Mittel Nanopartikel enthält, insbesondere metall- und nichtmetalloxidische Partikel, vorzugsweise mit einer Partikelgröße im Bereich zwischen 2 nm und 50 nm.

9. Verfahren nach einem der Ansprüche 1 bis 8, **dadurch gekennzeichnet, dass** das Mittel wenigstens ein Feststoffschmiermittel enthält, vorzugsweise ein Wachs, Stearat, Graphit, MoS2, Bornitrid, Aluminiumoxid, Titandioxid oder ein Schichtpigment, insbesondere Glimmer.

10. Verfahren nach einem der Ansprüche 1 bis 9, **dadurch gekennzeichnet, dass** das Mittel Rheologieadditive enthält, vorzugsweise Thixotropiermittel und/oder Verlaufsmittel.

11. Verfahren nach einem der Ansprüche 1 bis 10, **dadurch gekennzeichnet, dass** die Beschichtungszusammensetzung nasschemisch auf die Oberfläche des Substrats aufgetragen und danach gehärtet wird.

12. Verfahren nach einem der Ansprüche 1 bis 1.1, **dadurch gekennzeichnet, dass** ein Substrat aus einem hochfesten Stahl oberflächenbeschichtet wird.

13. Verfahren nach einem der Ansprüche 1 bis 12, **dadurch gekennzeichnet, dass** der Warmumformprozess bei einer Temperatur zwischen 800°C und 1.000°C, vorzugsweise bei einer Temperatur zwischen 880°C und 970°C erfolgt.

14. Verfahren nach einem der Ansprüche 1 bis 13, **dadurch gekennzeichnet, dass** eine Direktbeschichtung von Stahlcoils, vorzugsweise in einer Bandbeschichtungsanlage, erfolgt.

15. Verfahren nach einem der Ansprüche 1 bis 14, **dadurch gekennzeichnet, dass** eine Lackschicht mit einer Schichtdicke von weniger als 30 µm, vorzugsweise weniger als 10 µm, aufgebracht wird.

16. Verfahren nach einem der Ansprüche 1 bis 15, **dadurch gekennzeichnet, dass** die Beschichtungszusammensetzung durch Ablüften bei Raumtemperatur oder bei erhöhter Temperatur von bis zu 400°C gehärtet wird.

17. Verfahren nach einem der Ansprüche 1 bis 16, **dadurch gekennzeichnet, dass** die Beschichtungszusammensetzung beschleunigt gehärtet wird, insbesondere mittels IR-Strahlung, Umlufttrocknung, UV-Bestrahlung oder Elektronenstrahlhärtung.

18. Verfahren nach einem der Ansprüche 1 bis 17, **dadurch gekennzeichnet, dass** nach der Oberflächenbeschichtung eine KTL-Lackierung und/oder Phosphatierung erfolgt.

19. Verfahren nach einem der Ansprüche 1 bis 18, **dadurch gekennzeichnet, dass** das mit der Lackschicht versehene Substrat anschließend in mindestens einem Arbeitsschritt einer Kaltumformung unterzogen wird.

20. Verfahren nach Anspruch 19, **dadurch gekennzeichnet, dass** mindestens ein Kaltumformungsschritt vorgesehen ist, bevor ein Warmumformprozess erfolgt.

21. Kraftfahrzeugbauteil, insbesondere Karosserieteil, **dadurch gekennzeichnet, dass** dieses mindestens teilweise eine nach einem Verfahren gemäß einem der Ansprüche 1 bis 20 hergestellte Oberflächenbeschichtung aufweist.

## Claims

1. Method for coating a metallic surface of a substrate, wherein said surface is composed at least partly of steel, by applying to the surface a composition for producing a protective coat against scaling, said composition comprising as binders hydrolysates/condensates of at least one silane or a silicone resin binder and furthermore at least one metallic filler, and subsequently drying and/or curing the coating, and by subjecting the substrate, after it has been surface coated, to a hot forming operation.

2. Method according to claim 1, **characterized in that** the composition further comprises at least one metal salt.

3. Method according to one of the claims 1 or 2, **characterized in that** the hydrolysates/condensates of at least one silane are formed at least from one alkoxysilane, arylsilane and/or alkylsilane.

4. Method according to one of the claims 1 to 3, **characterized in that** the binder has been dissolved beforehand in a solvent, the solids content being preferably between 10% and 90%.

5. Method according to claim 4, **characterized in that** the solvent is an alcohol, ester, ether or a hydrocarbon, preferably having a flash point > 23°C.

6. Method according to one of the claims 1 to 5, **characterized in that** the metallic filler is a metal pigment of one of the metals Al, Zn, Mg, Fe, and Sn or of an alloy of one of these metals.

7. Method according to one of the claims 1 to 6, **characterized in that** the composition comprises as metallic filler at least one metal pigment in an amount such that curing of the coating results in a fraction of between 10% and 90% solids.

8. Method according to one of the claims 1 to 7, **characterized in that** the composition comprises nanoparticles, especially metal and nonmetal oxide particles, preferably having a particle size in the range of between 2 nm and 50 nm.

9. Method according to one of the claims 1 to 8, **characterized in that** the composition comprises at least one solid lubricant, preferably a wax, stearate, graphite, MoS₂, boron nitride, aluminum oxide, titanium dioxide or a laminar pigment, especially mica.

10. Method according to one of the claims 1 to 9, **characterized in that** the composition comprises rheological additives, preferably thixotropic agents and/or flow control agents.

11. Method according to one of the claims 1 to 10, **characterized in that** the coating composition is applied wet-chemically to the surface of the substrate and subsequently cured.

12. Method according to one of the claims 1 to 11, **characterized in that** a substrate made of a high-strength steel is surface coated.

13. Method according to one of the claims 1 to 12, **characterized in that** the hot forming operation takes place at a temperature between 800°C and 1000°C, preferably at a temperature between 880°C and 970°C.

14. Method according to one of the claims 1 to 13, **characterized in that** steel coils are directly coated, preferably on a coil coating line.

15. Method according to one of the claims 1 to 14, **characterized in that** a coating film having a film thickness of less than 30 µm, preferably less than 10 µm, is applied.

16. Method according to one of the claims 1 to 15, **characterized in that** the coating composition is cured by flashing off at room temperature or at an elevated temperature of up to 400°C.

17. Method according to one of the claims 1 to 16, **characterized in that** the coating composition is subjected to accelerated curing, in particular by means of IR radiation, forced-air drying, UV irradiation or electron beam curing.

18. Method according to one of the claims 1 to 17, **characterized in that** the surface coating is followed by cathodic electrodeposition coating and/or phosphating.

19. Method according to one of the claims 1 to 18, **characterized in that** the substrate provided with the coating film is subjected subsequently in at least one workstep to cold forming.

20. Method according to claim 19, **characterized in that** at least one cold forming step is provided before a hot forming operation takes place.

21. Automotive component, in particular bodywork part, **characterized in that** it has at least partly a surface coating produced by a method according to one of the claims 1 to 20.

## Revendications

1. Procédé pour le revêtement d'une surface métallique d'un subjectile qui consiste au moins en partie en acier, dans lequel on applique sur la surface une composition pour la production d'une couche protectrice contre le calaminage, qui contient en tant que liant des hydrolysats/produits de condensation d'au moins un silane ou un liant à base de résine de silicone ainsi qu'en outre au moins une charge métallique et le revêtement est ensuite séché et/ou durci complètement, et le subjectile après le revêtement de la surface étant soumis à un processus de formage à chaud.

2. Procédé selon la revendication 1, **caractérisé en ce que** la composition en outre contient au moins un sel métallique.

3. Procédé selon la revendication 1 ou 2, **caractérisé en ce que** les hydrolysats/produits de condensation d'au moins un silane sont formés à partir d'un alcoxysilane, arylsilane et/ou alkylsilane.

4. Procédé selon l'une quelconque des revendications 1 à 3, **caractérisé en ce que** le liant est dissous au préalable dans un solvant, la teneur en matière solide étant comprise de préférence entre 10 % et 90 %.

5. Procédé selon la revendication 4, **caractérisé en ce que** le solvant est un alcool, un ester, un éther ou un hydrocarbure, ayant de préférence un point d'inflammation > 23 °C.

6. Procédé selon l'une quelconque des revendications 1 à 5, **caractérisé en ce que** la charge métallique est un pigment métallique de l'un des métaux Al, Zn, Mg, Fe, Sn ou d'un alliage de l'un de ces métaux.

7. Procédé selon l'une quelconque des revendications 1 à 6, **caractérisé en ce que** la composition contient en tant que charge métallique au moins un pigment métallique en une quantité telle qu'après durcissement du revêtement il en résulte une proportion comprise entre 10 % et 90 % de matière solide.

8. Procédé selon l'une quelconque des revendications 1 à 7, **caractérisé en ce que** la composition contient des nanoparticules, en particulier des particules de type oxyde métallique et oxyde métalloïdique, de préférence ayant une taille de particule dans la plage comprise entre 2 nm et 50 nm.

9. Procédé selon l'une quelconque des revendications 1 à 8, **caractérisé en ce que** la composition contient au moins un lubrifiant solide, de préférence une cire, un stéarate, du graphite, MoS₂, du nitrure de bore, de l'oxyde d'aluminium, du dioxyde de titane ou un pigment lamellaire, en particulier du mica.

10. Procédé selon l'une quelconque des revendications 1 à 9, **caractérisé en ce que** la composition contient des additifs de rhéologie, de préférence des agents de thixotropie et/ou des agents d'étalement.

11. Procédé selon l'une quelconque des revendications 1 à 10, **caractérisé en ce que** la composition de revêtement est appliquée par voie chimique humide sur la surface du subjectile et ensuite durcie.

12. Procédé selon l'une quelconque des revendications 1 à 11, **caractérisé en ce qu'**un subjectile à base d'un acier très résistant est revêtu en surface.

13. Procédé selon l'une quelconque des revendications 1 à 12, **caractérisé en ce que** le processus de formage à chaud s'effectue à une température comprise entre 800 °C et 1 000 °C, de préférence à une température comprise entre 880 °C et 970 °C.

14. Procédé selon l'une quelconque des revendications 1 à 13, **caractérisé en ce qu'**on effectue un revêtement direct de rubans continus en acier, de préférence dans une unité d'enduction en continu.

15. Procédé selon l'une quelconque des revendications 1 à 14, **caractérisé en ce qu'**on applique une couche de peinture ayant une épaisseur de couche de moins de 30 µm, de préférence de moins de 10 µm.

16. Procédé selon l'une quelconque des revendications 1 à 15, **caractérisé en ce que** la composition de revêtement est durcie par évaporation à la température ambiante ou à une température élevée allant jusqu'à 400 °C.

17. Procédé selon l'une quelconque des revendications 1 à 16, **caractérisé en ce que** la composition de revêtement est durcie de façon accélérée, en particulier par irradiation IR, séchage avec circulation d'air, irradiation UV ou durcissement par faisceau d'électrons.

18. Procédé selon l'une quelconque des revendications 1 à 17, **caractérisé en ce qu'**après le revêtement de la surface on effectue un peinturage par KTL (électrodéposition cathodique) et/ou une phosphatation.

19. Procédé selon l'une quelconque des revendications 1 à 18, **caractérisé en ce que** le subjectile muni de la couche de peinture est ensuite soumis à un formage à froid, dans au moins une étape de travail.

20. Procédé selon la revendication 19, **caractérisée en ce qu'**on effectue au moins une étape de formage à froid avant d'effectuer un processus de formage à chaud.

21. Pièce de construction d'automobile, en particulier pièce de carrosserie, **caractérisée en ce qu'**elle comporte au moins en partie un revêtement superficiel produit conformément à un procédé selon l'une quelconque des revendications 1 à 20.
